# EUROPÄISCHE PATENTSCHRIFT

(11) **EP 2 929 622 B1**
(45) Veröffentlichungstag und Bekanntmachung des Hinweises auf die Patenterteilung: **08.02.2017**
(21) Anmeldenummer: 13777041.8
(22) Anmeldetag: 15.10.2013
(51) Int. Cl.: H02K 17/16

(54) **ASYNCHRONMASCHINE MIT OPTIMIERTER AUFTEILUNG ELEKTRISCHER VERLUSTE ZWISCHEN STATOR UND ROTOR**
ASYNCHRONOUS MACHINE WITH OPTIMIZED DISTRIBUTION OF ELECTRICAL LOSSES BETWEEN STATOR AND ROTOR
MACHINE ASYNCHRONE À RÉPARTITION OPTIMISÉE DES PERTES ÉLECTRIQUES ENTRE LE STATOR ET LE ROTOR

(30) Priorität: 10.12.2012 DE 102012222616
(43) Veröffentlichungstag der Anmeldung: 14.10.2015
(73) Patentinhaber: Robert Bosch GmbH, 70442 Stuttgart (DE)
(72) Erfinder: RUIZ DE LARRAMENDI, Miguel, 71638 Ludwigsburg (DE); HEUSER, Patrick, 70372 Stuttgart (DE); HERRANZ GRACIA, Mercedes, 97941 Tauberbischofsheim (DE)
(86) Internationale Anmeldenummer: PCT/EP2013/071473
(87) Internationale Veröffentlichungsnummer: WO 2014/090440

(56) Entgegenhaltungen:
- EP-A2- 0 280 194
- EP-A2- 1 248 349
- DE-B- 1 176 269
- US-A- 4 831 301

## Beschreibung

### Gebiet der Erfindung

Die vorliegende Erfindung betrifft eine Asynchronmaschine beispielsweise in Form eines elektrischen Asynchronmotors oder eines Generators.

### Stand der Technik

Es werden elektrische Maschinen entwickelt, um in Zukunft beispielsweise Elektrofahrzeuge oder Hybridfahrzeuge elektrisch antreiben beziehungsweise kinetische Energie des Fahrzeugs in elektrische Energie reküperieren zu können. Die elektrische Maschine kann dabei entweder als Motor oder als Generator wirken.

Derzeit werden verschiedene elektrische Maschinen insbesondere für den Einsatz in Fahrzeugen weiterentwickelt. Insbesondere werden Anstrengungen unternommen, Asynchronmaschinen für den Einsatz in Fahrzeugen zu optimieren. Vor allem für zukünftige Straßenfahrzeuge sollte die Asynchronmaschine hierzu einerseits möglichst klein und leicht sein, andererseits sollte sie einen hohen Wirkungsgrad bei möglichst hoher Leistungsabgabe und hohem zur Verfügung stehendem maximalem Drehmoment besitzen.

Asynchronmaschinen weisen als wesentliche Baukomponenten einen Stator und einen Rotor auf. Ähnlich wie bei anderen elektrischen Maschinen ist in dem Stator eine oder mehrere Wicklungen untergebracht, mithilfe derer im Stator ein drehendes magnetisches Feld erzeugt werden kann. Im Gegensatz zu vielen anderen Typen elektrischer Maschinen sind an dem relativ zu dem Stator rotierbaren Rotor jedoch keine Magneten in Form von Permanentmagneten oder von außen gespeisten Elektromagneten vorgesehen. Stattdessen beinhaltet der Rotor einen in der Regel kurzgeschlossenen Leiter, der teilweise auch als passiver Läufer bezeichnet wird. Das von dem Stator erzeugte drehende magnetische Feld rotiert mit einer so genannten Synchrondrehzahl, welche dem Quotienten f₁/p aus der Grundfrequenz f₁ des speisenden Systems und der Polpaarzahl p entspricht. Sobald die mechanische Drehzahl des Rotors sich von der Synchrondrehzahl unterscheidet, erfährt der Rotor eine Änderung des magnetischen Flusses. Dadurch werden Ströme in den kurzgeschlossenen Rotorleitern induziert. Durch eine Interaktion zwischen dem rotierenden magnetischen Feld des Stators und den Rotorströmen wird ein zwischen dem Stator und dem Rotor ansetzendes Drehmoment bewirkt.

Beispiele einer Asynchronmaschine, welche teilweise auch als Induktionsmotor bezeichnet wird, werden in den Dokumenten EP 0 280 194 A2, DE 11 76 269 B und EP 2 202 781 A2 beschrieben.

### Offenbarung der Erfindung

Ausführungsformen von Asynchronmaschinen gemäß der vorliegenden Erfindung ermöglichen unter anderem eine verbesserte Eignung für den Einsatz in Elektrokraftfahrzeugen oder Elektrohybridfahrzeugen. Insbesondere ermöglichen Ausführungsformen der vorliegenden Erfindung eine Asynchronmaschine, welche im Vergleich zu herkömmlichen Asynchronmaschinen ein höheres Dauerdrehmoment bei gleichzeitig weiterhin hoher Drehmomentdichte ermöglicht.

Es wird eine Asynchronmaschine vorgeschlagen, die einen Rotor und einen den Rotor umgebenden Stator aufweist. Der Stator hat hierbei einen Statoraußendurchmesser D1a. Der Stator weist ein außenliegendes Statorjoch mit einer Statorjochhöhe hy1 auf. Außerdem weist der Stator mehrere von dem Statorjoch radial nach innen abragende Zähne mit einer Statorzahnhöhe hz1 und einer mittleren Statorzahnbreite bmz1 auf. Zwischen benachbarten Statorzähnen weist der Stator in Statornuten angeordnete Statorspulenelemente auf. Der Rotor hat einen Rotoraußendurchmesser D2a. Der Rotor weist ein innenliegendes Rotorjoch mit einer Rotorjochhöhe hy2, mehrere von dem Rotorjoch radial nach außen abragende Rotorzähne mit einer Rotorzahnhöhe hz2 und einer mittleren Rotorzahnbreite bmz2 sowie mehrere jeweils zwischen benachbarten Rotorzähnen in Rotornuten angeordnete Rotorspulenelemente auf. Die Asynchronmaschine zeichnet sich durch drei zusammenwirkende Merkmale aus: erstens weist die Asynchronmaschine eine Polpaarzahl von 3 auf; zweitens ist ein Verhältnis von Rotoraußendurchmesser D2a zu Statoraußendurchmesser D1a derart gewählt, dass es zwischen 0,7 und 0,9, vorzugsweise zwischen 0,7 und 0,8, liegt; und drittens ist ein Verhältnis von Statorzahnhöhe hz1 zu Rotorzahnhöhe hz2 so gewählt, dass es zwischen 0,3 und 0,6 liegt.

Ausführungsformen der hierin vorgeschlagenen Asynchronmaschine können unter anderem als auf den nachfolgend beschriebenen Ideen und Erkenntnissen beruhend angesehen werden.

Asynchronmaschinen werden in Fahrzeugen unter anderem aufgrund ihrer hohen Zuverlässigkeit und ihres hohen Wirkungsgrades in fahrzyklusrelevanten Bereichen eingesetzt. Um hierbei erforderlichenfalls kurzzeitig eine hohe Drehmomentdichte bereit stellen zu können, werden mithilfe der in dem Stator vorgesehenen Wicklungen geeignete sich ändernde Magnetfelder erzeugt, um in dem in dem Rotor vorgesehenen kurzgeschlossenen Leiter hohe Rotorströme zu induzieren.

Allerdings kommt es durch solche hohen Rotorströme aufgrund des nicht zu vernachlässigenden elektrischen Widerstandes innerhalb des kurzgeschlossenen Leiters auch zu hohen elektrischen Verlusten innerhalb des Rotors. Da diese Verluste an den Rotor abgegeben werden und bei diesem zu einer Erwärmung führen, steigt die Temperatur des Rotors bei hoher Drehmomentabgabe beziehungsweise Leistungsabgabe stark an. Eine aktive direkte Kühlung des Rotors lässt sich nur mit erheblichem Zusatzaufwand und damit verbundenen zusätzlichen Kosten bewirken. Ohne eine solche Kühlung erreicht der Rotor irgendwann eine Grenztemperatur, bei der eine Schädigung von Komponenten des Rotors einzusetzen kann. Beispielsweise sinkt die mechanische Festigkeit von Materialien typischerweise mit der Temperatur, so dass die mechanische Stabilität des Rotors bei zu hohen Temperaturen nicht gewährleistet ist. Im Fall einer Überschreitung der Grenztemperatur können dann Risse und in Extremfall die mechanische Zerstörung der Komponenten auftreten. Daher muss, sobald die Rotortemperatur sich der Grenztemperatur nähert, das von der Maschine bereitgestellte Drehmoment begrenzt werden, das heißt, eine Fahrzeugsteuerung kann dem Motor nicht mehr das volle Drehmoment abverlangen.

Eine Grundidee zu der hierin vorgeschlagenen Asynchronmaschine kann nun darin gesehen werden, die in der Asynchronmaschine auftretenden elektromagnetischen Verluste zumindest teilweise von dem Rotor in den Stator zu verschieben, da der Stator in der Regel sehr viel einfacher und effizienter gekühlt werden kann.

Um dies zu bewirken, werden die oben bereits kurz genannten und beanspruchten Maßnahmen getroffen. Details dieser Maßnahmen und ihre möglichen Wirkungen und Wechselwirkungen werden nachfolgend beschrieben.

Erstens wird die Asynchronmaschine und insbesondere deren Stator derart ausgebildet und angesteuert, dass die Asynchronmaschine eine Polpaarzahl von 3 aufweist.

Die Polpaarzahl p ist die Anzahl der Paare von magnetischen Polen innerhalb einer rotierenden elektrischen Maschine. In einer Minimalkonfiguration von p=1 weist eine elektrische Maschine lediglich ein Polpaar auf, das heißt einen magnetischen Nordpol und einen magnetischen Südpol. Bei einer Umpolung des von dem Stator bewirkten Magnetfeldes dreht sich der Rotor um 180°. Maschinen mit einer Polpaarzahl von p=3 sind so ausgebildet und angesteuert, dass sich entlang des Umfangs des Stators alternierend angeordnet drei magnetische Nordpole und drei magnetische Südpole ergeben. Bei einer Umpolung des Magnetfeldes dreht sich der Rotor somit lediglich um 60°.

Für den Einsatz in Kraftfahrzeugen werden bisher meist Asynchronmaschinen mit einer Polpaarzahl von p=2 eingesetzt. Die Erfinder der vorliegend beschriebenen Asynchronmaschine haben jedoch erkannt, dass sich bei derartigen herkömmlichen Asynchronmaschinen mit Polpaarzahl 2 die im Rotor auftretenden elektrischen Verluste nur schwierig nennenswert senken lassen. Es wird daher vorgeschlagen, die Asynchronmaschine mit Polpaarzahl 3 auszubilden. Eine solche Asynchronmaschine mit Polpaarzahl 3 hat bei ansonsten ähnlicher Geometrie der Maschinenkomponenten und gleicher bewirkter Drehzahl zwar ein geringeres Drehmoment als eine Asynchronmaschine mit Polpaarzahl 2. Die Jochsättigung innerhalb des Statorjochs ist jedoch bei einer Maschine mit Polpaarzahl 3 erheblich geringer als bei einer Maschine mit Polpaarzahl 2, so dass das Statorjoch kleiner dimensioniert werden kann, das heißt, eine geringere, als Statorjochhöhe hy1 bezeichnete Abmessung in Radialrichtung aufweisen kann.

Aufgrund des geringeren für das Statorjoch benötigten Platzbedarfs kann die Geometrie der hier vorgeschlagenen Asynchronmaschine im Vergleich zu herkömmlichen Asynchronmaschinen bei gleich bleibenden Außenabmessungen derart geändert werden, dass erstens der Außendurchmesser des Rotors größer gewählt werden kann, als bei herkömmlichen Asynchronmaschinen und damit ein Verhältnis von Rotoraußendurchmesser zu Statoraußendurchmesser größer ist, und beispielsweise im Bereich von 0,7 bis 0,9, vorzugsweise 0,7 bis 0,8, liegen kann, und dass zweitens die Höhe der Rotorzähne und somit der für die Rotorspulenelemente zur Verfügung stehende Platz zwischen benachbarten Rotorzähnen vergrößert werden kann, so dass sich ein verkleinertes Verhältnis von Statorzahnhöhe zu Rotorzahnhöhe ergibt, das beispielsweise im Bereich von 0,3 bis 0,6 liegen kann.

Mithilfe der erstgenannten Maßnahme, das heißt, der Vergrößerung des Rotoraußendurchmessers, kann aufgrund einer damit einhergehenden Erhöhung des Hebelarms für die Drehmomentbildung der Drehmomentverlust, der sich aufgrund des Übergangs von einer Asynchronmaschine mit Polpaarzahl 2 zu einer Asynchronmaschine mit Polpaarzahl 3 ergibt, weitgehend kompensiert werden. Die hier vorgeschlagene Asynchronmaschine ist bei gleichen Außenabmessungen daher in der Lage, im Wesentlichen eine gleiche Drehmomentdichte bereit zu stellen, wie dies bei herkömmlichen Asynchronmaschinen der Fall ist. Beispielsweise kann eine Asynchronmaschine, die zum Beispiel einen Statoraußendurchmesser im Bereich von 130 bis 240mm aufweist, dazu ausgelegt sein, eine Drehmomentdichte von zwischen 35 Nm/I und 70 Nm/I zu erzeugen, um beispielsweise ein Drehmoment im Bereich von 40 Nm bis 350 Nm zu erzeugen.

Die mögliche Vergrößerung des Rotoraußendurchmessers ermöglicht ferner eine Erhöhung der Rotornutfläche, das heißt, der zwischen zwei benachbarten Rotorzähnen zur Verfügung stehenden Querschnittsfläche zur Aufnahme von Rotorspulenelementen, da mit größer gewähltem Rotoraußendurchmesser auch die Höhe der Rotorzähne größer gewählt werden kann. Aufgrund einer solchen Erhöhung der Rotornutfläche kann der von dieser Querschnittsfläche invers abhängige elektrische Widerstand innerhalb eines als Rotorspulenelement dienenden kurzgeschlossenen Leiters verringert werden. Hierdurch lassen sich letztendlich die elektrischen Verluste innerhalb des Rotors während des Betriebs der Asynchronmaschine erheblich verringern. Bei gleich bleibendem Kurzzeitdrehmoment wird von einer Reduzierung der Rotorverluste um bis zu 40% ausgegangen. Im Gegenzug entstehende erhöhte Verluste innerhalb des Stators führen zu keinen wesentlichen Einschränkungen beim Betrieb der Asynchronmaschine, da die hiermit verbundene erzeugte Wärme mithilfe einer am Stator einfach zu realisierenden direkten Kühlung abgeführt werden kann.

Insgesamt führen die verringerten Verluste im Rotor zu einer Möglichkeit, das von der Asynchronmaschine zur Verfügung zu stellende Dauerdrehmoment zu erhöhen.

Im Rahmen der zuvor vorgeschlagenen Maßnahmen der Änderung der Polpaarzahl auf 3 sowie der relativen Vergrößerung des Rotoraußendurchmessers und der Rotorzahnhöhe kann die restliche Geometrie der Komponenten der vorgeschlagenen Asynchronmaschine weiter für eine optimierte elektrische und / oder magnetische Aufteilung verbessert werden.

Beispielsweise können die Statorjochhöhe hy1 und die Rotorjochhöhe hy2 ähnlich groß dimensioniert werden und sich vorzugsweise um weniger als 20% voneinander unterscheiden.

Die mittleren Breiten bmz1, bmz2 der Statorzähne beziehungsweise Rotorzähne können abhängig von einer Stator- und Rotornutzahl N1, N2 in etwa wie folgt dimensioniert werden: bmz1 = hy/(N1/(6p)) und bmz2 = hy/(N2/(6p)). Die Zahnbreiten können dabei beispielsweise in einem Bereich von plus oder minus 20% variiert werden, so dass sich bei einer Polpaarzahl p = 3 folgende Abhängigkeiten ergeben können:
0,8*(hy1/(N1*18)) ≤ bmz1 ≤ 1,2*(hy1/(N1*18)) und
0,8*(hy2/(N2*18)) ≤ bmz2 ≤ 1,2*(hy2/(N2*18))

Eine Querschnittsfläche der Statornuten sowie Eisenwege, die sich aus der Statorjochhöhe hy1, der Rotorjochhöhe hy2, der mittleren Statorzahnbreite bmz1 und der mittleren Rotorzahnbreite bmz2 ergeben, können so gewählt sein, dass eine elektrische Stromdichte in einer der Statornuten an einer Kurzzeitgrenze von maximal 40A/mm² liegt und gleichzeitig eine Induktion im Statorjoch, im Rotorjoch und in den Stator- und Rotorzähnen in einem Sättigungsbereich von 1,7 bis 2,0T liegt. Unter der Kurzzeitgrenze der Stromdichte kann hierbei eine thermisch bedingte maximale Stromdichte verstanden werden, der eine Statorwicklung für eine kurze Zeit von wenigen Sekunden standhalten kann. Der Sättigungsbereich ergibt sich dadurch, dass Eisen eine nicht lineare Magnetisierungskennlinie hat, bei der ab einem gewissen Punkt, d.h. bei Erreichen der Sättigung, nicht mehr linear mehr Strom reicht, um linear mehr Fluss zu bekommen, sondern überproportional viel Stromanstieg für eine geringe Flusszunahme benötigt wird. Durch die Festlegung der maximalen Kurzzeitstromdichte und der maximalen Induktion in Eisen wird eine optimale Ausnutzung der Maschine erreicht.

Es wird darauf hingewiesen, dass Ausführungsformen der vorliegenden Erfindung hierin teilweise mit Bezug auf die gesamte Asynchronmaschine und teilweise mit Bezug auf einzelne ihrer Komponenten wie zum Beispiel den Stator und den Rotor beschrieben sind. Ein Fachmann wird erkennen, dass die möglichen Merkmale in geeigneter Weise ausgetauscht oder kombiniert werden können, um auf diese Weise zu weiteren Ausführungsformen und vorzugsweise Synergieeffekten gelangen zu können.

### Kurze Beschreibung der Zeichnungen

Nachfolgend werden Ausführungsformen der vorliegenden Erfindung unter Bezugnahme auf die beigefügten Figuren beschrieben, wobei weder die Figuren noch die Beschreibung als die Erfindung einschränkend ausgelegt werden sollen.
Figur 1 zeigt eine perspektivische Ansicht einer Asynchronmaschine.
Figur 2 zeigt eine Querschnittsansicht einer Asynchronmaschine gemäß einer Ausführungsform der vorliegenden Erfindung.
Figur 3. zeigt eine vergrößerte Teilansicht im Querschnitt einer Asynchronmaschine gemäß einer Ausführungsform der vorliegenden Erfindung.
Figur 4 zeigt ein Fahrzeug gemäß einer Ausführungsform der vorliegenden Erfindung.

Die Figuren sind lediglich schematisch und nicht maßstabsgetreu. Gleiche oder gleich wirkende Merkmale werden in den Figuren mit gleichen Bezugszeichen betitelt.

### Ausführungsformen der Erfindung

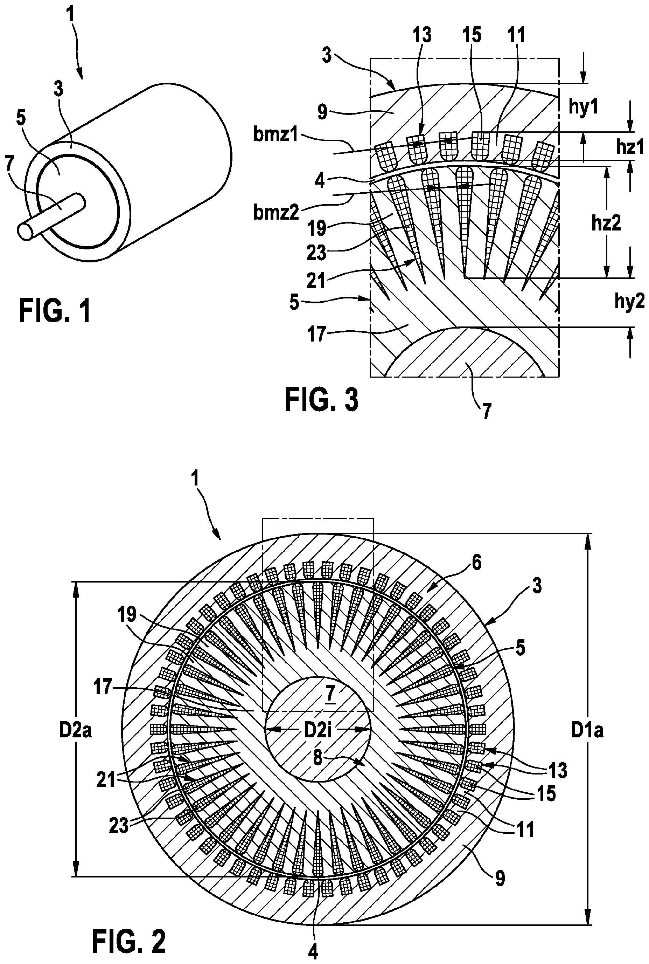

Figur 1 zeigt eine Asynchronmaschine 1 gemäß einer Ausführungsform der vorliegenden Erfindung. Die Asynchronmaschine 1 weist einen Stator 3, einen Rotor 5 und eine Welle 7 auf. Der Stator 3 umgibt den Rotor 5 ringförmig. Der Rotor 5 ist somit innerhalb des Stators 3 um die Welle 7 herum rotierbar aufgenommen. Stator 3 und Rotor 5 weisen eine zylindrische Form auf.

In den Figuren 2 und 3 sind eine Elektromaschine 1 im Querschnitt sowie ein vergrößerter Ausschnitt eines solchen Querschnitts dargestellt. Zwischen dem Stator 3 und dem Rotor 5 besteht ein kleiner Spalt 4. Sowohl der Stator 3 als auch der Rotor 5 bestehen aus einer Vielzahl von Lamellen 6, 8, die in axialer Richtung hintereinander angeordnet sind.

Der Stator 3 weist außenliegend ein Statorjoch 9 auf. Das Statorjoch 9 ist ringförmig beziehungsweise zylinderförmig. Eine Abmessung des Statorjochs 9 in radialer Richtung wird als Statorjochhöhe hy1 bezeichnet. Von dem Statorjoch 9 ragen nach innen Statorzähne 11 ab. Die Statorzähne 11 weisen eine Statorzahnhöhe hz1 und eine mittlere Statorzahnbreite bmz1 auf. Sowohl der Stator 9 als auch die Statorzähne 11 bestehen im Wesentlichen aus einem magnetisierbaren, vorzugsweise ferromagnetischen Material wie zum Beispiel Eisen oder Elektroblech. In den zwischen benachbarten Statorzähnen 11 gebildeten Statornuten 13 ist elektrisch gut leitfähiges Material wie zum Beispiel Kupfer oder Aluminium aufgenommen, welches zur Bildung von Statorspulenelementen 15 dient.

Der Rotor 5 weist ein innen liegendes Rotorjoch 17 auf, welches ebenfalls ringförmig, insbesondere zylinderförmig ausgestaltet ist. Von dem Rotorjoch 17 ragen nach außen Rotorzähne 19 ab. Die Abmessungen des Statorjochs 17 sowie der Rotorzähne 19 werden als Rotorjochhöhe hy2, Rotorzahnhöhe hz2 und mittlere Rotorzahnbreite bmz2 bezeichnet. Auch das Rotorjoch 17 und die Rotorzähne 19 bestehen im Wesentlichen aus einem magnetisierbaren, vorzugsweise ferromagnetischen Material wie beispielsweise Eisen oder Elektroblech. Zwischen benachbarten Rotorzähnen 19 befinden sich Rotornuten 21, in denen ein elektrisch gut leitfähiges Material wie zum Beispiel Kupfer oder Aluminium aufgenommen ist und zur Bildung von Rotorspulenelementen 23 dient. Die Rotorspulenelemente 23 können hierbei als zeitweise oder permanent kurzgeschlossene Leiterstrukturen ausgebildet sein.

Der Außendurchmesser des Rotors 5 wird mit D2a bezeichnet und ist die Summe des Durchmessers D2i der Welle 7, der Rotorjochhöhe hy2 und der Rotorzahnhöhe hz2. Der Außendurchmesser der Stators 3 wird als D1a bezeichnet und ergibt sich als Summe aus dem Rotoraußendurchmesser D2a, der Breite des Spaltes 4, der Statorjochhöhe hy1 und der Statorzahnhöhe hz1.

Die Statorspulenelemente 15 sind derart angeordnet, verschaltet und angesteuert, dass sich für die Asynchronmaschine 1 eine Polpaarzahl von 3 ergibt, das heißt, dass sich ein rotierendes Gesamtmagnetfeld mit drei magnetischen Nordpolen und drei magnetischen Südpolen einstellt. Hierzu werden jeweils mehrere der parallel zu der Welle 7 verlaufenden Statorspulenelemente 15 in gleicher Richtung bestromt. Das von den Statorspulenelementen 15 erzeugte Magnetfeld wird hauptsächlich in dem Statorjoch 3 und den Statorzähnen 11 gebündelt und von dem Stator 3 dann auf den Rotor 5 insbesondere in dessen Rotorzähnen 19 und dem Rotorjoch 17 übertragen.

Da jeder der sechs magnetischen Pole sich lediglich innerhalb eines Winkelbereichs von 60° in dem Stator 3 erstreckt, ist die Jochsättigung bei dem Stator 3 der vorgeschlagenen Asynchronmaschine 1 geringer als bei einer Asynchronmaschine mit Polpaarzahl 2, so dass sowohl die Statorjochhöhe hy1 als auch die Statorzahnhöhe hz1 kleiner dimensioniert sein kann. Bei gleichem Statoraußendurchmesser D1a von beispielsweise 150mm kann somit der Rotoraußendurchmesser D2a größer als bei herkömmlichen Asynchronmaschinen sein und im vorgestellten Fall im Bereich von 105 bis 120mm liegen. Dementsprechend kann auch die Rotorzahnhöhe hz2 und damit verbunden die Querschnittsfläche der Rotornuten 21 größer sein.

Da die Statornuten 13 bei der vorgeschlagenen Asynchronmaschine 1 somit im Verhältnis zu den Rotornuten 21 kleiner sind als bei herkömmlichen Asynchronmaschinen, verteilen sich die insgesamt in der Asynchronmaschine 1 auftretenden elektrischen Verluste stärker auf den einfach kühlbaren Stator 3, wohingegen der nur schwierig kühlbare Rotor 5 weniger Verlustwärme aufnehmen muss.

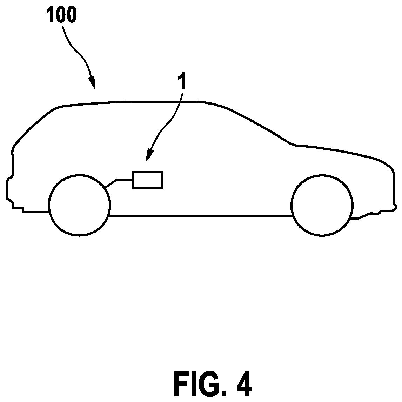

In Figur 4 ist schematisch ein Kraftfahrzeug 100 mit einer erfindungsgemäßen Asynchronmaschine 1 dargestellt. Im dargestellten Beispiel treibt die Asynchronmaschine 1 die Hinterräder des Kraftfahrzeugs an. Es sind jedoch auch Front- oder Allradantriebe möglich.

## Patentansprüche

1. Asynchronmaschine (1), aufweisend:
einen Rotor (5),
einen den Rotor (5) umgebenden Stator (3),
wobei der Stator (3) einen Statoraußendurchmesser D1a hat und ein außenliegendes Statorjoch (9) mit einer Statorjochhöhe hy1, mehrere von dem Statorjoch (9) radial nach innen abragende Statorzähne (11) mit einer Statorzahnhöhe hz1 und einer mittleren Statorzahnbreite bmz1 sowie mehrere jeweils zwischen benachbarten Statorzähnen (11) in Statornuten (13) angeordnete Statorspulenelemente (15) aufweist,
wobei der Rotor (5) einen Rotoraußendurchmesser D2a hat und ein innenliegendes Rotorjoch (17) mit einer Rotorjochhöhe hy2, mehrere von dem Rotorjoch (17) radial nach außen abragende Rotorzähne (19) mit einer Rotorzahnhöhe hz2 und einer mittleren Rotorzahnbreite bmz2 sowie mehrere jeweils zwischen benachbarten Rotorzähnen (19) in Rotornuten (21) angeordnete Rotorspulenelemente (23) aufweist,
wobei die Asynchronmaschine (1) eine Polpaarzahl p von p=3 aufweist, **dadurch gekennzeichnet, dass**
ein Verhältnis von Rotoraußendurchmesser D2a zu Statoraußendurchmesser D1a zwischen 0,7 und 0,9 liegt, und
ein Verhältnis von Statorzahnhöhe hz1 zu Rotorzahnhöhe hz2 zwischen 0,3 und 0,6 liegt.

2. Asynchronmaschine nach Anspruch 1, wobei sich die Statorjochhöhe hy1 von der Rotorjochhöhe hy2 um weniger als 20% unterscheidet.

3. Asynchronmaschine nach Anspruch 1 oder 2, wobei die mittlere Statorzahnbreite bmz1 abhängig von einer Statornutzahl N1 in einem Bereich von bmz1 = 0,8*(hy1/(N1*18)) bis bmz1 = 1,2*(hy1/(N1*18)) liegt.

4. Asynchronmaschine nach einem der Ansprüche 1 bis 3, wobei die mittlere Rotorzahnbreite bmz2 abhängig von einer Rotornutzahl N2 in einem Bereich von bmz2 = 0,8*(hy2/(N2*18)) bis bmz2 = 1,2*(hy2/(N2*18)) liegt.

5. Asynchronmaschine nach einem der Ansprüche 1 bis 4, wobei eine Querschnittsfläche der Statornuten (13) sowie Eisenwege, die sich aus der Statorjochhöhe hy1, der Rotorjochhöhe hy2, der mittleren Statorzahnbreite bmz1 und der mittleren Rotorzahnbreite bmz2 ergeben, so gewählt sind, dass eine elektrische Stromdichte in einer der Statornuten (13) an einer Kurzzeitgrenze von maximal 40A/mm² liegt und gleichzeitig eine Induktion im Statorjoch, im Rotorjoch (17) und in den Stator- und Rotorzähnen in einem Sättigungsbereich von 1,7 bis 2,0T liegt.

6. Asynchronmaschine nach einem der Ansprüche 1 bis 5, wobei der Statoraußendurchmesser D1a im Bereich von 130 bis 240mm liegt.

7. Asynchronmaschine nach einem der Ansprüche 1 bis 6, wobei die Asynchronmaschine (1) für eine Erzeugung einer Drehmomentdichte von zwischen 35 Nm/I und 70 Nm/I ausgelegt ist.

8. Kraftfahrzeug (100) mit einer als Antriebsmotor und/oder als Rekuperationsgenerator dienenden Asynchronmaschine (1) gemäß einem der Ansprüche 1 bis 7.

## Claims

1. Asynchronous machine (1) comprising:
a rotor (5),
a stator (3) that surrounds the rotor (5),
wherein the stator (3) has a stator outer diameter D1a and comprises an outer-lying stator yoke (9) having a stator yoke height hy1, multiple stator teeth (11) that project radially inwards from the stator yoke (9), said stator teeth having a stator tooth height hz1 and a mean stator tooth width bmz1, and also multiple stator coil elements (15) that are in each case arranged between adjacent stator teeth (11) in stator grooves (13),
wherein the rotor (5) has a rotor outer diameter D2a and an inner-lying rotor yoke (17) having a rotor yoke height hy2, multiple rotor teeth (19) that project radially outwards from the rotor yoke (17), said rotor teeth having a rotor tooth height hz2 and a mean rotor tooth width bmz2, and also multiple rotor coil elements (23) that are arranged in each case between adjacent rotor teeth (19) in rotor grooves (21),
wherein the asynchronous machine (1) comprises a pole pair number p of p=3,
**characterized in that**
a ratio of rotor outer diameter D2a with respect to stator outer diameter D1a lies between 0.7 and 0.9, and
a ratio of stator tooth height hz1 with respect to rotor tooth height hz2 lies between 0.3 and 0.6.

2. Asynchronous machine according to Claim 1, wherein the stator yoke height hy1 differs from the rotor yoke height hy2 by less than 20%.

3. Asynchronous machine according to Claim 1 or 2, wherein the mean stator tooth width bmz1 dependent upon a stator groove number N1 lies in a range of bmz1 = 0.8*(hy1/(N1*18)) to bmz1 = 1.2*(hy1/(N1*18)).

4. Asynchronous machine according to any one of the Claims 1 to 3, wherein the mean rotor tooth width bmz2 dependent upon a rotor groove number N2 lies in a range of bmz2 = 0.8*(hy2/(N2*18)) to bmz2 = 1.2*(hy2/(N2*18)).

5. Asynchronous machine according to any one of the Claims 1 to 4, wherein a cross sectional surface of the stator grooves (13) and also iron paths that occur as a result of the stator yoke height hy1, the rotor yoke height hy2, the mean stator tooth width bmz1 and the mean rotor tooth width bmz2 are selected in such a manner that an electrical current density lies in one of the stator grooves (13) at a short-term limit of maximal 40 A/mm² and simultaneously an induction in the stator yoke, in the rotor yoke (17) and in the stator teeth and rotor teeth lies in a saturation range of 1.7 to 2.0 T.

6. Asynchronous machine according to any one of the Claims 1 to 5, wherein the stator outer diameter D1a lies in the range of 130 to 240 mm.

7. Asynchronous machine according to any one of the Claims 1 to 6, wherein the asynchronous machine (1) is designed so as to generate a torque density of between 35 Nm/I and 70 Nm/I.

8. Motor vehicle (100) having an asynchronous machine (1) in accordance with any one of the Claims 1 to 7, said asynchronous machine being used as a drive motor and/or as a recuperation generator.

## Revendications

1. Machine asynchrone (1), comportant :
un rotor (5),
un stator (3) entourant le rotor (5),
dans lequel le stator (3) présente un diamètre extérieur de stator D1a et comporte une culasse de stator (9) extérieure ayant une hauteur de culasse de stator hy1, plusieurs dents de stator (11) partant radialement vers l'intérieur de la culasse de stator (9) et ayant une hauteur de dent de stator hz1 et une largeur de dent de stator moyenne bmz1 ainsi que plusieurs éléments de bobine de stator (15) respectivement disposés entre des dents de stator (11) adjacentes dans des encoches de stator (13),
dans lequel le rotor (5) présente un diamètre extérieur de rotor D2a et comporte une culasse de rotor interne (17) ayant une hauteur de culasse de rotor hy2, plusieurs dents de rotor (19) partant radialement vers l'extérieur de la culasse de rotor (17) et ayant une hauteur de dent de rotor hz2 et une largeur de dent de rotor moyenne bmz2 ainsi que plusieurs éléments de bobine de rotor (23) respectivement disposés entre des dents de rotor (19) voisines dans des encoches de rotor (21),
dans lequel la machine asynchrone (1) présente un nombre de paires de pôles p de p=3,
**caractérisée en ce qu'**un rapport du diamètre extérieur de rotor D2a au diamètre extérieur de stator D1a se situe entre 0,7 et 0,9, et **en ce qu'**un rapport de la hauteur de dent de stator hz1 à la hauteur de dent de rotor hz2 se situe entre 0,3 et 0,6.

2. Machine asynchrone selon la revendication 1, dans laquelle la hauteur de culasse de stator hy1 diffère de la hauteur de culasse de stator hy2 d'au moins 20 %.

3. Machine asynchrone selon la revendication 1 ou 2, dans laquelle la largeur de dent de stator moyenne bmz1 se situe dans une plage allant de bmz1 = 0,8*(hy1/(N1*18)) à bmz1 = 1,2*(hy1/(N1*18)) en fonction d'un nombre d'encoches de stator N1.

4. Machine asynchrone selon l'une quelconque des revendications 1 à 3, dans laquelle la largeur de dent de stator moyenne bmz2 se situe dans une plage allant de bmz2 = 0,8*(hy2/(N2*18)) à bmz2 = 1,2*(hy2/(N2*18)) en fonction d'un nombre d'encoches de stator N2.

5. Machine asynchrone selon l'une quelconque des revendications 1 à 4, dans laquelle une surface de section transversale des encoches de stator (13) ainsi que des circuits magnétiques qui résultent de la hauteur de culasse stator hy1, de la hauteur de culasse de rotor hy2, de la largeur de dent de stator moyenne bmz1 et de la largeur de dent de rotor moyenne bmz2, sont sélectionnés de manière à ce qu'une densité de courant électrique passant dans les encoches de stator (13) se situe à une limite d'exposition à court terme d'au plus 40 A/mm² et, simultanément, à ce que l'induction produite dans la culasse de stator, dans la culasse de rotor (17) et dans les dents de stator et de rotor se situe dans une plage de saturation de 1,7 à 2,0 T.

6. Machine asynchrone selon l'une quelconque des revendications 1 à 5, dans laquelle le diamètre extérieur de stator D1a se situe dans la plage de 130 à 240 mm.

7. Machine asynchrone selon l'une quelconque des revendications 1 à 6, dans laquelle la machine asynchrone (1) est conçue pour générer une densité de couple de rotation comprise entre 35 Nm/l et 70 Nm/l.

8. Véhicule à moteur (100) comportant une machine asynchrone (1) selon l'une quelconque des revendications 1 à 7, utilisée en tant que moteur d'entraînement et/ou en tant que générateur à récupération.
